Europäisches Patentamt

European Patent Office

Office européen des brevets

(19)

(11) Publication number: **0 039 747**

**A1**

(12) **EUROPEAN PATENT APPLICATION**

(21) Application number: 80301508.0

(22) Date of filing: 08.05.80

(51) Int. Cl.³: **A 01 G 31/00**
**A 01 G 31/02**

(43) Date of publication of application:
18.11.81 Bulletin 81/46

(84) Designated Contracting States:
AT BE CH DE FR IT LI LU NL SE

(71) Applicant: UNIVERSITY COLLEGE CARDIFF
C.U.I.C. University College P.O. Box 78
Cardiff, CF1 1XL(GB)

(72) Inventor: Jones, John Clive
3 Werfa Close Abernant
Aberdare Wales(GB)

(72) Inventor: Bates, Anthony Richard
18 Heol Isaf
Radyr Nr. Cardiff Wales(GB)

(72) Inventor: Dewsberry, Roland
16 Cory Crescent
Peterston Super Ely, Nr. Cardiff Wales(GB)

(72) Inventor: Ryan, Anthony
3 Llanbleddian Gardens
Cathays Cardiff, Wales(GB)

(74) Representative: Hartley, David et al,
WITHERS & ROGERS 4 Dyer's Buildings Holborn
London, EC1N 2JT(GB)

(54) Process and apparatus for growing crops and composite used therefor.

(57) A process and apparatus for growing crops using a nutrient film technique in which a permeable mass (4) of resilient elements (5) is used as a plant support. The elements may be formed by shredding or slitting plastics film or sheet, the film or sheet preferably being metallised.

FIG.1

0039747

<u>"Plant Growing System"</u>

A new technique of growing crops has recently been devised by workers at the Glasshouse Crops Research Institute. This is a nutrient film technique known as n.f.t. (N.F.T.).

The concept is that all the nutrients required for growth are made available to the bare roots of plants in a film of liquid nutrient in a water-tight channel. The water-tight channel serves both to hold the water and in many cases to provide some sort of support for the growing plant.

Ideally, the water-tight channel should allow a thin film of water to be made available to the plant roots and provide cover for the film so as to prevent algal growth. It must also allow a free movement of gas to and from the root area to prevent build up of toxic materials.

The channel must in some cases assist in maintaining a suitable root temperature of the plant. In hot climates the channel should not absorb too much sunlight and produce too high a temperature. In cooler climates where circulating nutrient solution is to warm the plant roots the channels should provide some thermal insulation.

As can be seen from the above the design of the channels has therefore to be fairly complicated and the result is a system where the plants have to be placed at specific points or along a specified line in the channel.

We have now found that when a particular type of plant support medium is used in NFT systems, advantages in and/or simplification of the technique can be obtained.

The particular type of plant support medium used in the NFT system is a permeable mass comprising resilient elements. It is essential that the mass is permeable to liquids and gases and to this end it preferably is a random mass, e.g. tangle, wad, batt or mat, of elements. It may have a more ordered structure such as a tow provided that, in this case, the elements are deformed e.g. by crimping, indenting, stretching or by the manner of producing them, to provide between them the spaces necessary for permeation of the mass by liquid and gas. This form of deformed element is also preferred for use in the random mass since permeability is thereby improved. The elements must be resilient so as to preserve the permeability of the mass when they are packed in growing apparatus and even if wetted with nutrient liquid.

Throughout this specification the term 'elements' is used to include filaments of different cross-sectional shape, for example circular, cruciform, star, square or rectangular, and strips of uniform or non-uniform width and/or thickness. Flakes and platelets of regular or irregular geometric shape and of uniform or non-uniform thickness, and the like are also included but preferably the elements are linear.

The material can be placed in open water-tight channels to give an N.F.T. system which fulfils all the requirements listed above, i.e. it supports growing plants, allows gas interchange in the channel, assists in temperature control and enables plants to be placed in any position in it. Because of the permeable nature of the mass, roots of plants growing in it can freely penetrate between the elements to reach the liquid film and absorb nutrients from it. At the same time, gases can diffuse into and out of the mass to promote plant growth.

Since the elements must maintain the permeable structure of the mass as used in NFT techniques they may be of plastics such as polythene, polypropylene, p.v.c., polystyrene, polyester and the like or of paper, particularly treated paper such as Kraft paper, which will retain a degree of rigidity even when damp or wet. The elements may be produced from plastics film material or other sheet material e.g. by slitting or shredding. Preferably, the film or sheet material is metallised. The metallic coating can assist in providing the necessary resilience and in maintaining a more even temperature in the mass. If desired, a mixture of metallised and unmetallised materials may be used.

Deformation may be achieved by stretching a portion of an element beyond its elastic limit, by corrugating or indenting the whole or a part, e.g. an edge region of an element, by dimpling, crinkling or perforating.

Where film or foil is used, which may, as mentioned, be metallised or unmetallised, sheets thereof may be shredded and deformation may be applied prior to, during or subsequent to shredding. Where metallised or unmetallised film or foil is used, we have found that the physical properties thereof are such that a naturally created crinkle or crimp is produced along the edge of strip-like elements produced by passing the film or foil through a conventional shredding machine. Further, by varying the thickness of the film or foil, the width of the strip-like element and the degree of crinkling, the physical properties of the elements can be varied. Such paper shredding machines are known and widely used for destroying documents and elements produced thereby have the advantage that they possess good resilience or recovery properties and they occupy a relatively large volume. The metallised coating may be aluminium or any other suitable metallic material. The thickness of the metallised coating may be up to 1 micron, the film or foil substrate of thickness up to 50 microns and the width of shredded elements may be as little as 7 microns and as much as 1 cm.

Improved processes of growing crops according to this invention may be carried out in long channels containing the permeable mass of elements, the channel being inclined from one end to the other to allow flow of nutrient liquid along the bottom of the channel and to prevent ponding. The depth of mass to be used in the channel depends on the crop to be grown therein. We have found a depth of $1\frac{1}{2}"$ to be suitable for lettuces, melons and peppers, though, of course, deeper layers can be used for crops such as tomatoes.

In another type of structure, more suitable for domestic use of NFT techniques, the permeable mass of elements is arranged in a trough of convenient length. In this case, the feed of nutrient liquid may be provided by a 'glug' bottle, preferably feeding into a depression in the bottom of the trough which can provide a liquid reservoir. Again, the depth of the trough and of the support medium will be appropriate to the crop to be grown therein.

Preferably, at the bottom of the channel or trough there is a layer of fabric which acts as a capillary mat. A non woven fabric, particularly of polyester fibre, is suitable. In a channel this layer assists in controlling the flow of liquid nutrient along the bottom of the channel; in a trough it assists in controlling the distribution of the liquid nutrient over the bottom of the trough from the supply point and where the trough has a depression at this point, the capillary mat should extend into the depression.

When using the particular support medium of this invention, plants to be grown are inserted in the mass contained in the channel or trough so that at least part of the root system is in contact with the nutrient liquid. Normally, in NFT techniques the film of liquid nutrient is on the bottom surface of a channel or trough or within a capillary mat if such a mat is used.

Where the support medium used in this invention is a mass comprising linear elements and is to be used in conjunction with a capillary mat then this invention also provides for use in NFT growing systems a permeable mass comprising resilient linear elements stitched to the capillary mat, the mass being of suitable thickness for use as a support medium. Such a composite can conveniently be laid in a channel or trough. When supplied in lengths it can conveniently be rolled up and subsequently unrolled when required for use.

The water-tight channel or trough may be a rigid structure or it may be provided by a supported flexible water-impermeable sheet material. The permeable mass to be used for the plant support may be supplied in combination with the water-impermeable sheet material, the sheet material being larger in size than the mass so that the overlapping edges of the sheet material may be turned up alongside the edges of the mass in order to provide the basic water-tight channel or trough. The turned up side-edges of the sheet must, of course, be supported for example by a rigid structure or by locating it

0039747

in a channel or trough in the ground.

When a composite as described above is to be used in channel-type NFT techniques, it can be laid on and rolled up with flexible sheet material. The sheet material used is of greater width than the composite, the composite being disposed centrally along the sheet, so that on unrolling the composite with the sheet underneath, the edges of the sheet can be turned up along the edges of the mass to provide a channel in which to operate the NFT technique. The side edges of such a channel can be supported by a structure as mentioned above or, alternatively, the composite/sheet can be laid in a channel in the ground.

Suitable sheet material is of plastics such as polythene, polypropylene, p.v.c., polyester, impregnated paper, and the like.

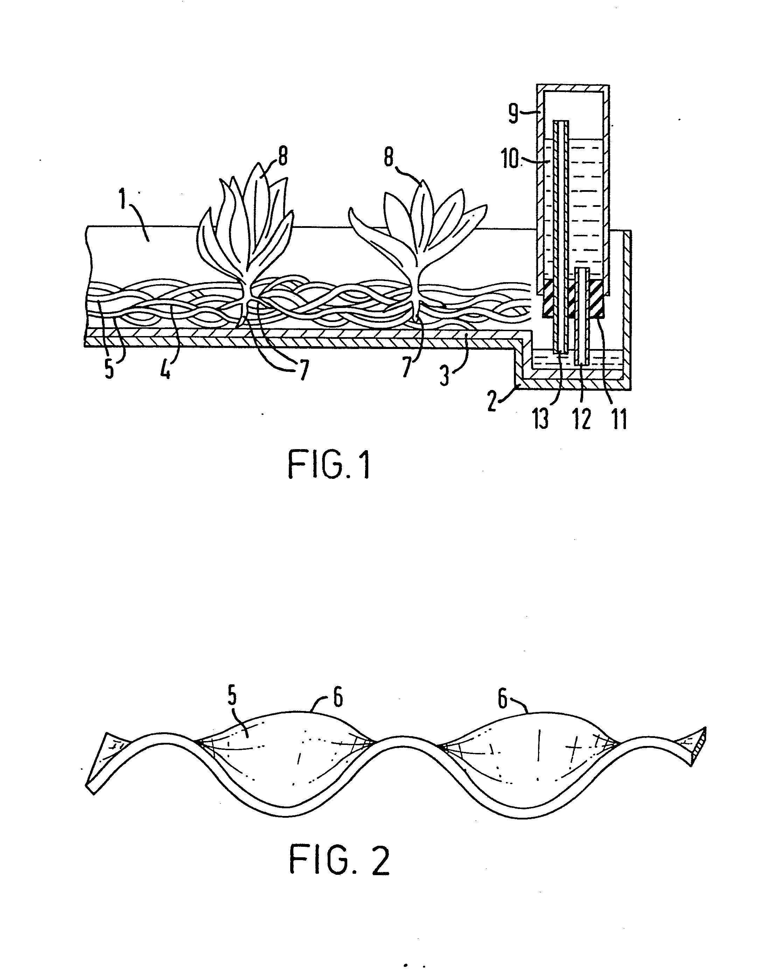

One embodiment of the invention is now described with reference to the accompanying drawings which show, in Fig. 1, a section of an apparatus suitable for growing crops and in Fig. 2 an element suitable for use in the apparatus of Fig. 1.

The apparatus comprises a rigid trough 1 of plastics material which is closed at one end and has, at that end, a depression 2. Along the bottom of the trough 1 and extending into the depression 2 is a length of capillary mat 3 which is a non-woven polyester fibre fabric. To the upper surface of the mat is secured by loose stitching a bat 4 of elements 5 of shredded metallised polyester film. During shredding, the edges of the elements 5 become crinkled as is shown at 6 in Fig. 2. This crinkle and the natural resilience of the polyester film even when wetted by nutrient liquid results in the bat being permeable to the liquid and to air.

As a consequence roots 7 of plants 8 growing in the plant support medium provided by the bat 4 can freely develop through the bat.

Liquid nutrient is supplied to the trough from a 'glug' bottle containing the nutrient 10. The bottle is closed by a stopper 11 carrying two tubes 12 and 13. The nutrient is fed into the depression by exit tube 12, air entering the bottle to replace the nutrient through inlet tube 13 until this is sealed by the rising level of liquid in the depression. As the liquid level falls as a result of capillary absorption by the mat 3, the lower end of tube 13 becomes unsealed and more air can enter bottle 9 thus allowing more liquid nutrient 10 to flow into the depression until inlet tube 12 again becomes sealed by the rise in level of liquid in the depression. Nutrient liquid absorbed by the mat is transmitted along it into the bat and to the roots 6.

CLAIMS:

1.      A process of growing crops using a nutrient film
technique in which a permeable mass comprising resilient elements
is used as a plant support medium.

2.      A process as claimed in Claim 1 in which the resilient
elements are linear.

3.      A process as claimed in Claim 1 or 2 in which the mass
comprises elements of metallised film or sheet.

4.      A process as claimed in Claim 1, 2 cr 3 in which the
mass comprises elements formed by shredding or slitting plastics
film or sheet.

5.      A process as claimed in any preceding claim in which the
mass comprises deformed elements.

6.      A process as claimed in any preceding claim in which
underneath the permeable mass there is a capillary mat which is
wetted by nutrient liquid.

7.      Apparatus for growing crops by nutrient film technique
comprising a channel or trough containing as a plant support
medium a permeable mass comprising   resilient elements.

8.      Apparatus for growing crops by nutrient film technique

0039747

comprising a trough containing as a plant support medium a
permeable mass of resilient elements, the trough being provided
with a depression into which nutrient liquid may be fed from a
'glug' bottle.

9.      Apparatus as claimed in Claim 7 or 8 in which the
permeable mass comprises elements as described in Claim 2, 3, 4
or 5.

10.     Apparatus as claimed in Claim 7, 8 or 9 in which there
is a capillary mat on the bottom of the channel or trough.

11.     A composite suitable for use in growing crops by
nutrient film technique comprising a permeable mass of resilient
linear elements, one face of the mass being covered with
capillary mat to which the mass is stitched.

12.     A composite as claimed in Claim 11 in which the
permeable mass comprises elements as described in Claim 3, 4 or 5.

13.     A composite as claimed in Claim 11 or 12 in which the
capillary mat-covered face is laid on a sheet of flexible water-
impermeable material of greater size than the mass so that the
free edges of the sheet can be turned up alongside the edges
of the mass.

14.     A composite and sheet as claimed in Claim 13 in roll form.

FIG. 1

FIG. 2

**European Patent Office**

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | AT - B - 312 351 (SEMPERIT)<br>* Whole document *<br><br>--<br><br>GB - A - 996 528 (DEUTSCHE INVESTBANK)<br>* Page 2, line 100 to page 3, line 83; page 4, lines 38-88; figures 1-4 *<br><br>--<br><br>GB - A - 1 562 182 (ICI)<br>* Whole document *<br><br>--<br><br>DE - A - 2 554 108 (BUNGARD)<br>* Page 16, 4th paragraph to page 17, 1st paragraph; figure 4 *<br><br>--<br><br>GB - A - 1 545 273 (ANSELM)<br>* Page 2, line 118 to page 3, line 77; figures 1,2,3 *<br><br>---- | 1,2,5,<br>7,11,<br>12<br><br>1,7,<br>11<br><br><br><br><br>1,6,7,<br>11,14<br><br><br><br>8<br><br><br><br><br>7,14 | A 01 G 31/00<br>31/02<br><br><br><br><br>TECHNICAL FIELDS SEARCHED (Int. Cl.³)<br><br>A 01 G 31/00<br>31/02<br>1/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-01-1981 | HERYGERS |

EPO Form 1503.1  08.78